# EUROPEAN PATENT SPECIFICATION

(11) **EP 1 957 790 B1**
(45) Date of publication and mention of the grant of the patent: **24.04.2013**
(21) Application number: 06828098.1
(22) Date of filing: 05.12.2006
(51) Int. Cl.: F03D 3/06, F03D 3/02, F03D 9/00

(54) **EOLIAN CONVERTER**
WINDKRAFTWANDLER
CONVERTISSEUR EOLIEN

(30) Priority: 05.12.2005 BR PI0505380; 28.11.2006 BR PI6017782
(43) Date of publication of application: 20.08.2008
(73) Proprietor: Dulcetti Filho, Flávio Francisco, 66050-160 Belém (BR)
(72) Inventor: Dulcetti Filho, Flávio Francisco, 66050-160 Belém (BR)
(74) Representative: Alves Moreira, Pedro
(86) International application number: PCT/BR2006/000260
(87) International publication number: WO 2007/065234

(56) References cited:
- EP-A1- 0 379 626
- WO-A1-94/20802
- WO-A1-03/014565
- WO-A1-03/014565
- DE-A1- 4 428 731
- DE-U1- 8 701 224
- GB-A- 2 246 173

## Description

### FIELD OF INVENTION

The present invention is applied to the electric power generation through the transformation of the eolical energy in a mechanical energy in a controlled way, working equipments for the electric power generation or hydraulic pumps, as well as rotors in general, with regulated potency exit supplying a stable independently of the wind speed.

### STATE OF THE ART

The traditional eolical converters are characterized by possess helixes that rotate in the vertical sense in parallel to the equipment sustaining post, and directly connected to the shaft of the generator or shells that rotate in the horizontal sense perpendicularly to the post, connected to a vertical axis.

In the case of the helixes, they just rotate in function of a component (fraction) of the resulting force of the wind, that through the angular variation of the step, it provides in the perpendicular sense to the wind direction. The aerodynamic surfaces of the shovels of the helixes besides they take advantage of only a component of the force of the wind, they possess extremely small area if compared to the circle described by your movement in addition, this configuration cannot increase the efficiency using several helixes to impel the same shaft in a space of reception of the wind for square meter.

Once the helixes were developed basically to produce the displacement of the mass of air, in other words, to move the wind and not to be moved by the wind, situation in that they are little efficient.

In the case of the shells, the problem is more serious, because they possess the same aerodynamic surface in your front and back parts just with different resistance coefficient, the resulting force is extremely small what reduces even more the efficiency in this method of pickup the wind force.

Another technical problem of the converters of the state of the art is the fact that the rotation generated is directly proportional with the incident wind speed without the possibility of controlling the angular speed of the shaft. In this way, the energy generated by generators attached to these converters is variable, what is not desirable for the generation of energy for consumption in wide scale.

In the state of the art can be found converters endowed with plates or blades also fixed to a horizontal shaft that rotate a vertical shaft. These blades are fixed to the horizontal shaft so that the blade is divided in two parts, with different dimensions, a part above the shaft and other below. When the wind beats on the front blade, this is in the vertical position rotating the main shaft. When the blade arrives in the position in that the wind beats in your back, this rotates to be in the horizontal position in a way that it does not generate resistance to the wind. However, this mechanism is ineffective, because when the blade is of backs in relation to the wind to be flagged, in other words, to be in the horizontal position, the part of the blade that is above of the horizontal shaft uses the force of the wind against the flagged position offering resistance to this, being necessary an area below the horizontal shaft bigger in the way that the wind force resultant makes possible the flagged position, what reduces the use of the force of the wind considerably for the transformation in rotation force to the main vertical shaft, whose resultant for transformation in rotation energy is very small if we compare the total area for push with the areas that offer resistance for the flagged position and unflagged position, in other words, this system possesses an efficiency as low as the helixes system, besides to have the same limitations to considerably expand the area of reception to pushing the same shafts to generate energy in great scale, due to the fact of the intermediate horizontal shaft to rotate with the blades resulting in the limitation of the size (width) of the blades that cannot reach significant dimensions in the structural and functional point of view, disabling the implantation of this system in the generation of energy in wide scale, because it is not possible to implement support systems to the horizontal axis in way to support big loads once the plates cannot be fixed in function of the movement of these, limiting your dimensions.

The solutions of the state of the art try to compensate such problem making the blades with materials of different weight, so that the superior part of the blade is lighter than the inferior part, however, this does with that when the blade has to be in the horizontal position, the inferior part being heavier demands a wind with larger force to leave it in the horizontal and same position altering the weight of the parts inferior and superior of the blades the problem becomes worse, therefore it still hinders more the flagged position of the blades once, what determines the flagged position they are the resultants of the wind against and in favor of the flagged position.

Another technical problem of this system for generation of energy in wide scale is because the non existence of a control that moves away or approximates the plates to the main shaft for the effective rotation control that compensates the wind speed variations. A prior art wind energy converter is disclosed for example in WO 03/014565 A1.

### BRIEF DESCRIPTION OF THE INVENTION

Based on the state of the art problems mentioned above, a new eolic converter was invented with unpublished characteristics to impel a system of electric power generation by the wind force, with use index among 90 to 98% of the wind force for the transformation in energy rotational mechanical energy, varying this percentile with the wind speed, at the same time in that they are added to this high efficiency the possibility to add several levels of plates without limit for the size of the referred plates, what provides for an only propeller shaft the use of gigantic areas of reception of the winds force where it can be added in order to allow a great area of wind reception for rotate the same shaft with low values of winds speed, and that it can, in embodiments of larger load, to have a control to provide an controlled and regulated potency output, as the usual in wide scale, free from variations, oscillations and noises, and, alternatively, in places whose the wind is insufficient in some periods, the project foresees a joining to the eolic system generator to a combustion motor with controlled injection, or in places that it already has offer of energy the automatic commutation for the moments of stoppage of the wind, providing a hybrid system.

The present system also presents a device of safety against strong winds and storms.

The technique used in the reception of the eolic force it provides the rotation of a vertical axis, by the wind force when the wind beats in plane aerodynamic plates, which rotate in the horizontal sense describing circles. The aerodynamic surfaces don't use format of shells or helixes, and they are constituted by plates with plane surface with square or rectangular format, with despicable thickness and that are made with extremely light and resistant material against the wind pressures.

The plates are fixed to a horizontal shafts by a hinges system or other device that it allows the plates to move in a quarter circle movement, where the hinges are fixed in the superior part of the plates and in a fixed horizontal shaft or threaded with your turn controlled by a servo-motor, providing the possibility to move away or to approximate the aerodynamic plates of reception from the vertical main shaft to the rotational control of the variations of the wind speed.

When receiving the wind force in your front part the plates stay in the vertical position producing traction and when receiving the wind in your back part (back) the plates get up being in the almost horizontal position, that is, flagged, resulting in a minimum aerodynamic resistance. In this system the plates use 100% of the force of the winds for tractioning or to flag depending on the position in relation to the wind sense not having any aerodynamic resistance produced by the force of the wind, reason of the high index of use of the wind force for the transformation in rotational mechanical energy that depends exclusively on the weight of the plates and the wind speed.

This rotational horizontal group is installed on a vertical structural tubular post, which can contain several groups of horizontal aerodynamic plates disposed in the vertical axis in variable angle in several vertical levels to increase the final potency, whose sizing up of the number of groups by structure and the size of the aerodynamic surfaces of the plates will depend on the capacity of the requested energy what the system will be destined.

The rotational vertical shaft is fixed on the support structural post fixed to the ground. The external rotational vertical shaft (cover) to which the structures are fixed under which are leaning the plates of reception of the winds works on bearings fixed to an internal structural post fixed to the ground or to high structures to catch less turbulent wind layers, having in their inferior extremity a gear system or pulleys that will be coupled with an electric power generator or another desirable rotational equipment. The diameter of the gears and/or pulleys with bigger and smaller size will be responsible by the multiplication factor of the number of rotations of the propeller shaft, and they will depend on the specifications and needs of the manufacturers of the generator that it be adopted, in way to obtaining the correct relationship with the wanted rotation medium.

In the cases in that it is necessary the generation of larger potency and better range of precision of the medium rotation, servo-motors can be used to move away or to approximate the aerodynamic plates from the rotation vertical shaft automatically, increasing or reducing the angular speed, in way to compensate the variations of the wind speed, as well as adding a inertial disk steering wheel with representative weight integrated to the largest gear in the base of the shaft increasing the inertia of the rotational movement. In the cases, in that it is necessary, an electro-magnetic motor can be coupled, with design and special reels, for the effective control of the rotation opposing resistance to the increase of the wanted rotation while sends a message to a control unit to the reposition, through the servo-motors, of the aerodynamic plates moving away them of the main shaft or inversely in case of fall of the speed of the winds approximating them of the main shaft, moment in that the motor won't carry out more the resistance function, starting to impel, while the plates approach to the shaft, to avoid the fall of the rotation, using for that pre-loaded batteries by the own way system to provide that the combustion motor only enters in operation in situations of long fails of the wind forces, as for instance above 3 minutes.

The present invention will be better understood through the detailed description of examples of embodiments of the invention and with base in the figures, however, these examples are not limitative of the invention.

### BRIEF DESCRIPTION OF THE FIGURES

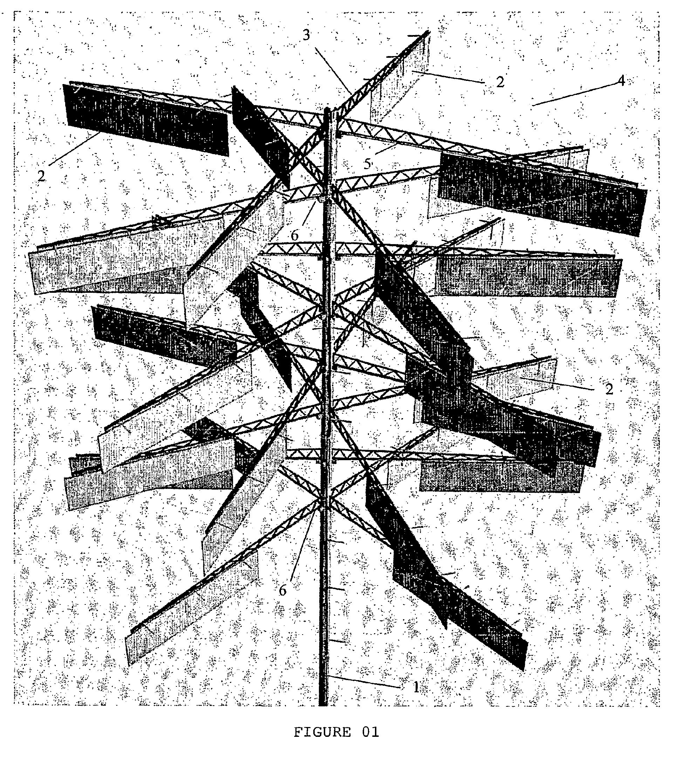

FIGURE 01 - Superior perspective view of the first embodiment of the invention;

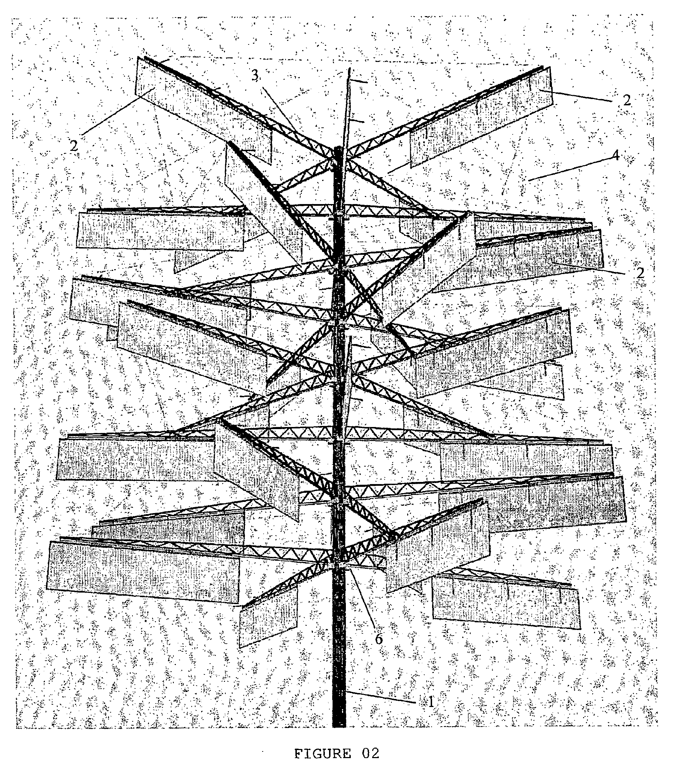

FIGURE 02 - Inferior perspective view of the first embodiment of the invention;

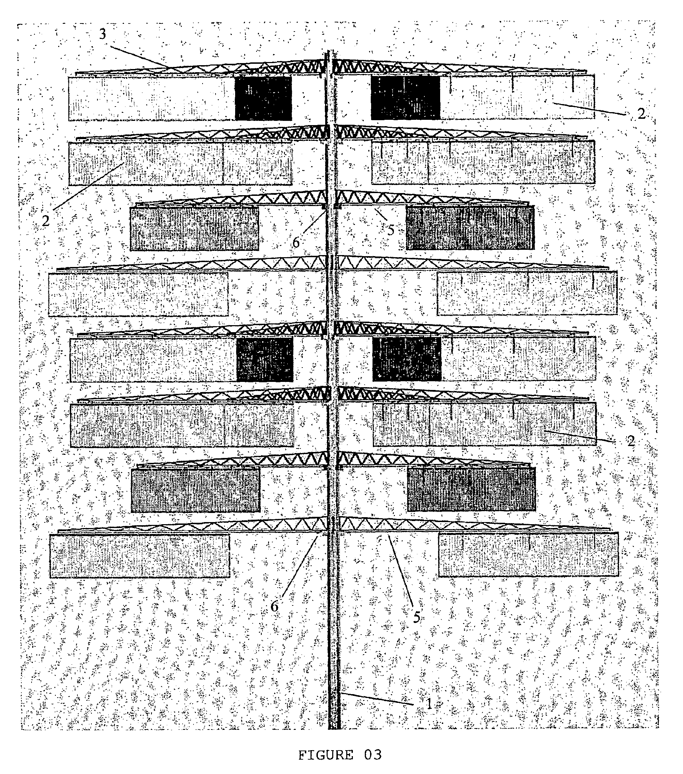

FIGURE 03 - Frontal view of the first embodiment of the invention;

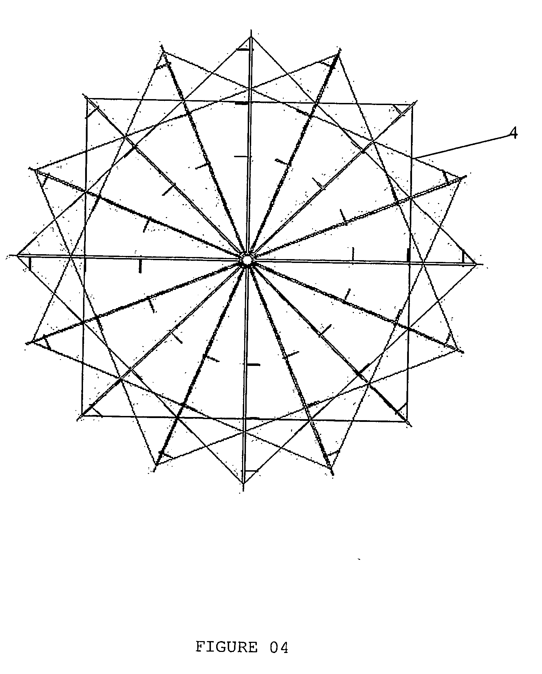

FIGURE 04 - Top view of the first embodiment of the invention;

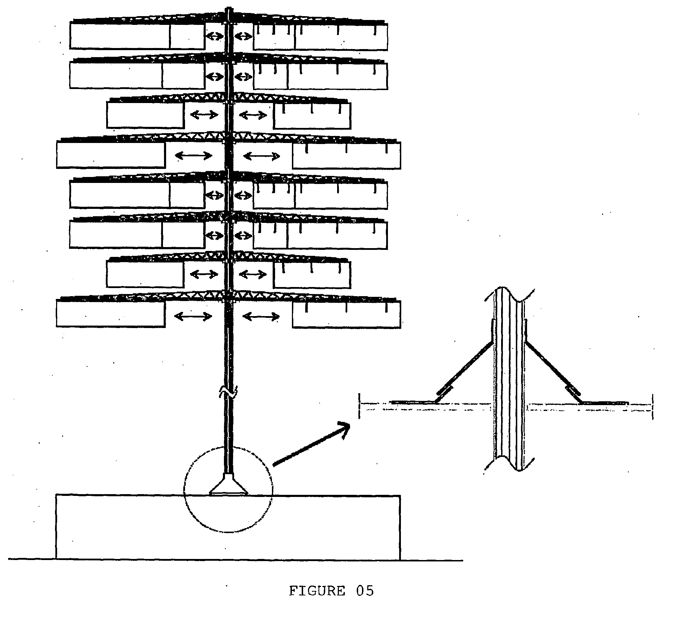

FIGURE 05 - Leaked frontal.view of the first embodiment of the invention illustrating the sense of displacement of the aerodynamic plates;

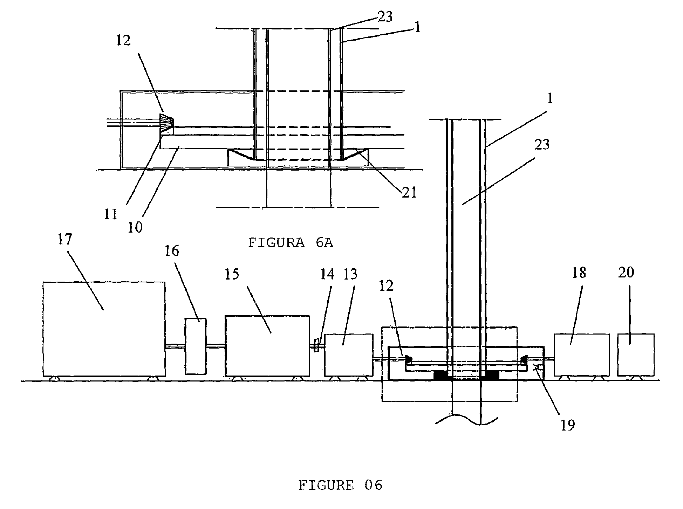

FIGURE 06 - Leaked frontal view base of the first embodiment of the invention;
FIGURE 07 - Superior perspective view of the second embodiment of the invention;

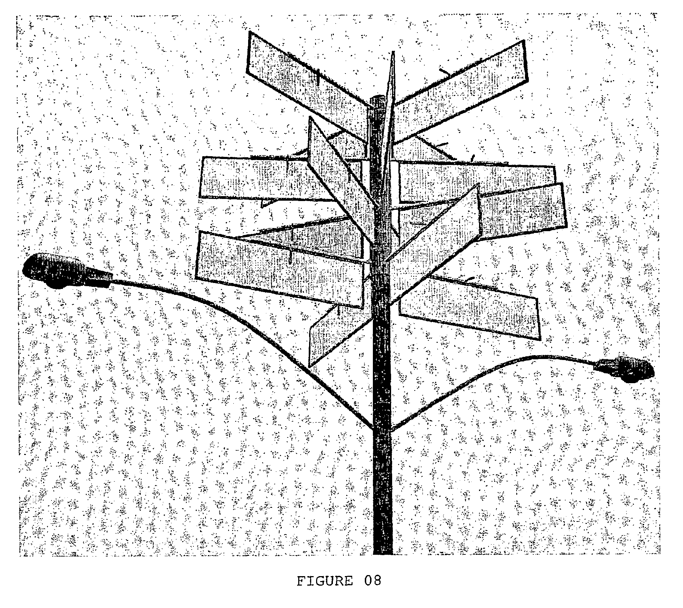

FIGURE 08 - Inferior perspective view of the second embodiment of the invention;

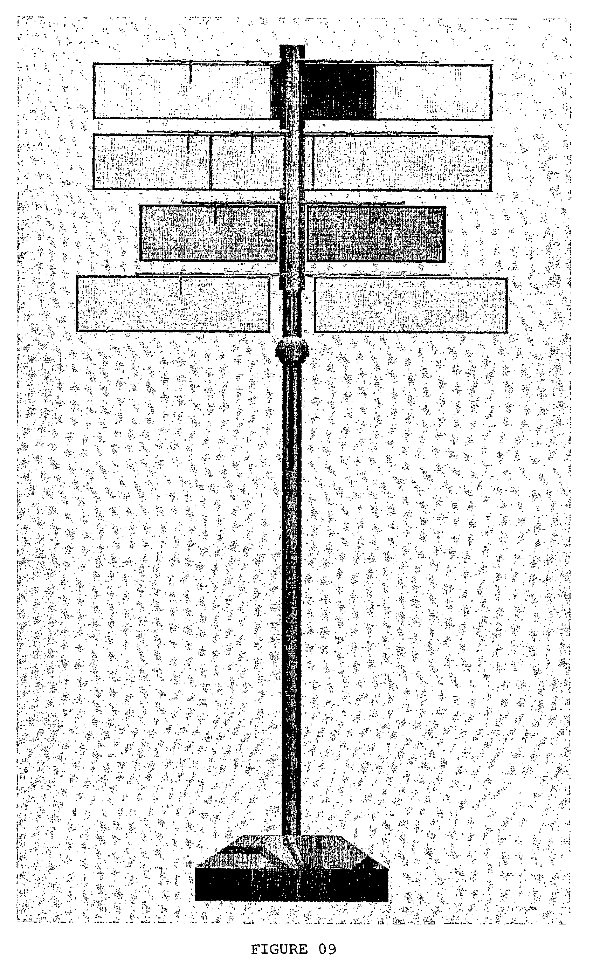

FIGURE 09 - Lateral view of the second embodiment of the invention;

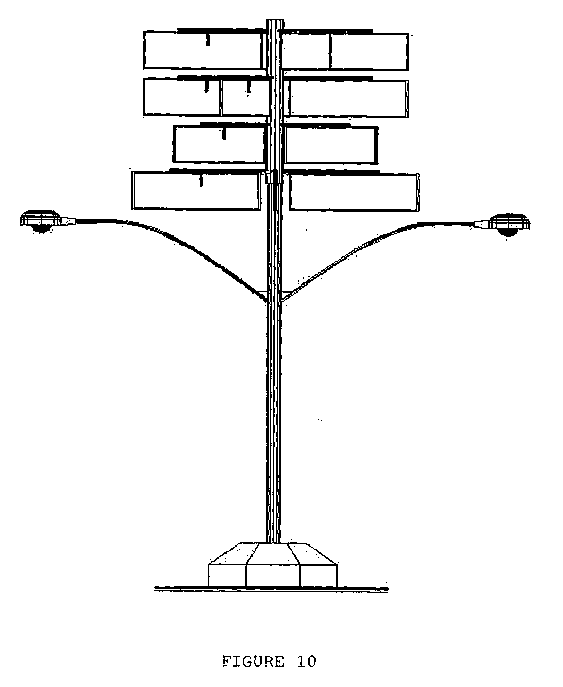

FIGURE 10 - Leaked frontal view of the second embodiment of the invention;

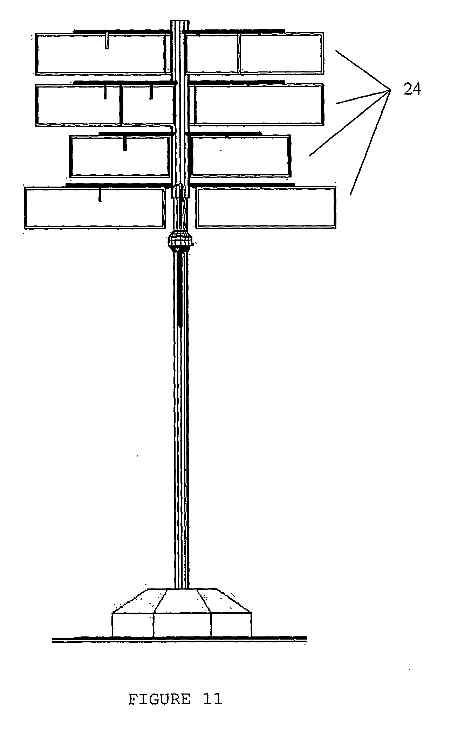

FIGURE 11 - Leaked lateral view of the second embodiment of the invention;

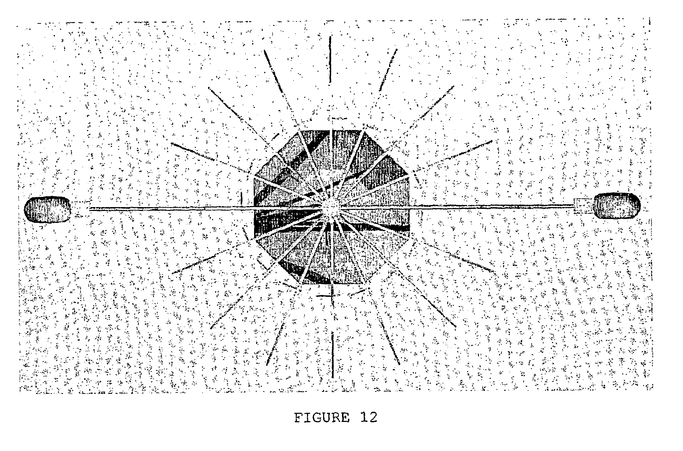

FIGURE 12 - Top view of the second embodiment of the invention;

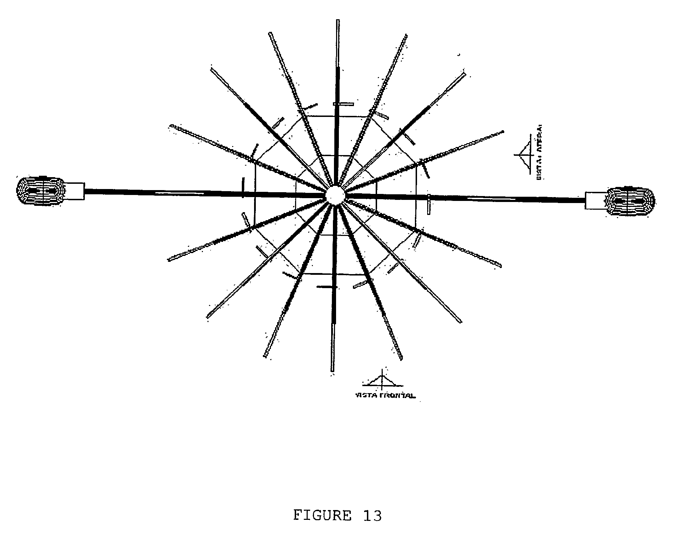

FIGURE 13 - Leaked top view of the second embodiment of the invention;

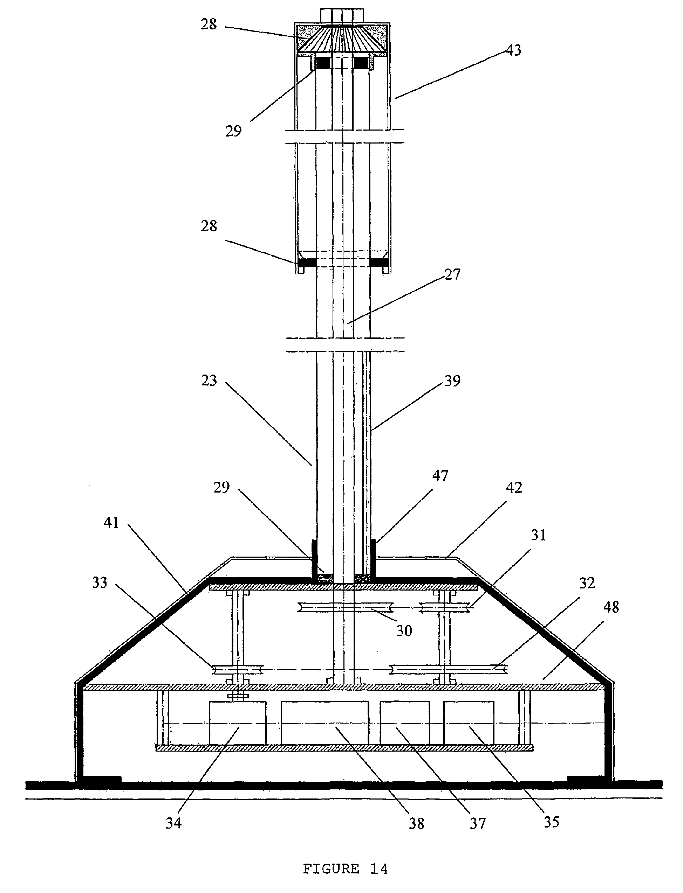

FIGURE 14 - Sectional cut frontal view of the second embodiment of the invention;

### DETAILED DESCRIPTION OF THE INVENTION

For better understanding of the present invention will be described below two possible embodiments, however, the invention is not limited to the drawings and embodiments presented below.

### FIRST EMBODIMENT OF THE INVENTION

This first embodiment of the present invention is destined to the generation of energy in small and big scale, being your structure capable to reach great dimensions. Such configuration is characterized by have a winds pickup system the that allows an use among 90 to 98% of the wind force for the transformation in rotational mechanical energy, at the same time in that are added to this great output the possibility to add several levels of plates without limit for the size of the referred plates, what provides for an propeller shaft the use of gigantic areas of reception of the winds force where can be added in order to allow a great area of wind reception for rotate a shaft even with low winds speeds, this system doesn't need to be put in the wind direction because it traction independently of the wind direction always rotating in the sense in that it was programmed to rotate, and it still have a device capable to control the rotation by minute of the cylindrical vertical hollow cover (1) through the approach and removal of the aerodynamic plates, and to be endowed with a cylindrical vertical hollow cover (1); aerodynamic plates (2) with controlled angular and translational movement; structured horizontal arms (3); structural fastening cables (4); horizontal rotation shafts (5); translation servo-motors of aerodynamic plates (6); rotation servo-motors of aerodynamic plates (7); aerodynamic plates rotation motors shafts (8); aerodynamic plates shock absorber (9); it rotates a inertial load steering wheel (10); steering wheel rack (11); generator bevel gear (12); RPM multiplier box (13); elastic coupling (14); alternating current generator (15); coupling hydraulic clutch with elastic glove (16); combustion motor (17); starter electromagnetic motor with electromagnetic brake and accelerator (18); rotation sensor (19); control and administration system central (20); support bearings (22); a cylindrical vertical post (23), where the aerodynamic plates (2) are fixed to the horizontal shafts (5) in way to allow the plates to make a quarter of circle part movement and also translates in both senses of the extension of the horizontal shafts (5) maintaining the angular speed of the cover (1) constant, and the horizontal arms (3) are fixed to the cover (1) forming crossbars (24) and on each horizontal plan these crossbars (24) are arranged so that the angle among them is given by the division of the angle of 90° by the number of used crossbars.

The cover (1) it is inserted in the top of the structural post (23) and sustained by surface bearings and support bearings (22) that allow the cover to rotate freely around the post with little resistance in your angular movement. The post (23) can be fixed directly to the ground through the conventional foundation techniques and infrastructure. As this converter system works with larger efficiency in altitudes where the winds are more uniform, the post of the converter and all your structure can be fixed on a construction, that elevates the converter until the ideal height of operation, in this way, is avoided the need of the construction of a post (23) and a cover (1) with the same size of the ideal height of operation, for example, if a place possesses your homogeneous winds to a height of 100 meters, then, the converter can be fixed in a construction of 50 meters and the post (23) and the cover (1) they can have a height of approximately 50 meters, instead of 100 meters, what would turn the structure of the converter less heavy and onerous.

The aerodynamic plates (2) are connected to the horizontal rotation shafts (5) through thread supports (25) that allow the translation of the plates (2) in both directions of the shafts (5) through the drive of the translation servo-motors (6) and the rotation of the plates (2), that on receive the wind force in their front part these maintain in the vertical position producing impulse to the horizontal arms (3) rotating the cover (1), and when the aerodynamic plates (2) receive the wind in your back parts (back) they get up being almost in the horizontal position (flagged) executing a quarter part of circle movement. The aerodynamic plates (2) are plane and laminated facilitating your displacement for the force of the wind in the moment of flagging or coming back to the vertical position to impel the horizontal arms (3) and by consequence to rotate the cover (1), that rotates the inertial load steering wheel (10) that transmits the rotation to the generator bevel gear (12) connected to the steering wheel rack (11). In this way, the horizontal rotation of the plates (2) provoked by the winds is transmitted to the generator (15) that receives this rotation already properly increased by the RPM multiplier box (13) in agreement with the characteristics of the alternating current generator (15). The connection among the RPM multiplier box (13) and the generator (15) happens through an elastic coupling (14) that allows the transmission of the rotation to the generator (15) without causing damages to your rotor shaft of the generator. Linked to the same generator rotor shaft, however, in the other extremity of the generator (15), it is connected to a combustion motor (17) through a coupling hydraulic clutch with elastic glove (16). This clutch (16) is worked by the control and administration system central (20) in moments where there are an absence of winds, very weak winds or moments of way storms to maintain the rotation of the generator (15) constant. However, before the combustion motor (17) be started the system starts a electromagnetic motor (18) in order to maintain the converter rotating constantly. Only if the time in that the situation of the wind is out of the normal, above a pre-determined period, it is that, then, the combustion motor (17) will be started and the electromagnetic motor (18) turned off.

The aerodynamic plates can be made of metallic materials, plastics, synthetic fibers, or woven light, resistant to the water and the weather effects, or any other material with such way characteristics they resist against force of the winds.

The aerodynamic plates possess a made rigid frame of a light material, just as metals, metallic leagues, aluminum, carbon fiber, iron, steel, or plastics to maintain the rigid plates in your form glide when these are under the pressure of the winds.

The aerodynamic plate (2) be in a support horizontal arm (3) that is linked to a safety servo-motor (7), that in moments of windstorm or storm rotates the plate (2) for the horizontal position flagging it.

The horizontal shafts (5) possess thread in form of endless screw and they are connected to the translation servo-motors (6) that rotate the horizontal shafts (5) in the hourly and counterclockwise sense moving away or approximating the aerodynamic plates (2) from the cover (1) maintaining the angular speed of the inertial load steering wheel (10), and consequently, the speed of the generator (15) constant.

The horizontal arms (3), *pensil* type, self-sustained, are tubular and with the structure in trellis and connected to the cover (1). The horizontal arms (3) can also be sustained by steel cables arrested among the extremities of the arms (3) and the cover (1) sparing the trellis structure. The horizontal arms (3) are interlinked to each other through steel cables (4) giving larger rigidity and stability to the group of arms (3) in a same plan that forms crossbars (24).

The horizontal arms (3) are endowed with shock absorber (9) that soften the angular movement of the aerodynamic plates (2) without damaging them absorbing the force of the wind applied to the plates (2) to reduce the impact on the traction or flagged position.

The cylindrical cover (1) is endowed with a inertial load steering wheel (10) in your inferior extremity. The inertial load steering wheel (10) have a rack (11) for transmission to the generator bevel gear (12) of the RPM multiplier box (13) and to the bevel gear of the electromagnetic motor (18) for control of the rotation and of the departure.

The alternating current generator (15) generates a constant exit and with absence of flotation of the cycle and, consequently, absence of noises in function of the constant rotation of the cover (1) proportioned by the control of the distance of the aerodynamic plates (2) from the cover (1) and/or of the control of the inclination of the plates (2) and also of the electromagnetic motor (18) controller.

The converter is endowed with a combustion motor (17) to maintain the rotation of the generator (15) constant in cases of weak wind or windstorms and storms.

An electromagnetic motor (18) is responsible for removing the system of the inertia in the moment of giving the departure of the converter in the case that the momentary wind is not strong enough to impel the converter. Such motor (18) also seeks auxiliary too in the control of the constant rotation of the cover (1) when used as magnetic brake increasing or reducing the load on the inertial load steering wheel (10) or traction to not leaving that the rotation suffer reduction

A rotation sensor (19) monitors the rotation of the inertial load steering wheel (10) serving as parameter for the control of the constant speed of the generator (15) guaranteeing an exit of energy inside with the cycle of the desirable patterns.

The management of the converter is executed by a control and administration system central (20) that administers the energy generated by the generator (15) maintaining your constant exit through the drive of the motors (6), (7), (17) and/or (18) with base in the feedback of the information of the momentary of the rotation sensor (19) and of the tension and exit current momentary of the generator (15). In spite of not cultured in the FIGURE, they are foreseen sensor of current and tension in the exit of the generator (15).

The located devices in the base of the converter for generation and administration of the generated energy are protected by a covering that impedes that such devices are reached by rain and sun.

### SECOND FORM OF EXECUTION OF THE INVENTION

On this second embodiment of the eolic CONVERTER, destined to the illumination of coastal areas and small communities, it is characterized by possessing a system of pickup of the winds that allows an use among 90 and 98% of this force for the transformation in rotational mechanical energy, at the same time in that they are added to this high efficiency the possibility to add several levels of plates, this system doesn't need to be oriented for the direction of the wind, because the converter traction independent of the direction of the wind, always rotating in the sense in that was programmed to rotate.

This converter is endowed with a cylindrical vertical post (23); plane aerodynamic plates (2); horizontal shafts (26); an rotational vertical shaft (27); rotational group bearings (28) of the group rotational; rotational vertical shaft bearings (29); pulleys (30)(31)(32)(33); continuous current generator (34); control circuit (35); brightness sensor (36); reactor (37; batteries (38); conduit wire (39); lamps (40), fixation post base (41); a fixation post base cover (42); a rotational group (43) where the aerodynamic plates (2) are fixed through hinges (44) to the horizontal shafts (26) so that a side of the hinges (44) it is fixed in the inferior part of the horizontal shafts (26) and the other side of the hinges (44) is fixed in the superior part of the plates (2), and the horizontal shafts (26) are fixed to the rotational group (43) forming crossbars (45) and to each horizontal plan they are willing these crossbars so that the angle among them is given by the division of the angle of 90° by the number of used crossbars.

In the present embodiment the rotational group (43) can be endowed with four or more crossbars (45), what results in an angle of 22,5° among the crossbars, when endowed with four levels of crossbars or smaller when endowed with more than four crossbars, where the angle is given by the division of the angle of 90° by the number of crossbars.

The rotational group (43) is inserted in the top of the post (23) and sustained by rotational group bearings (28) doing in the way that it rotates with freedom around the post.

The horizontal shafts (26) are endowed with stoppers (46) of two peaces that form an angle of 80° to each other, so that one of the peaces form 90° with the horizontal shaft (26) allowing that the plates (2) when receive the front wind they be supported maintaining their vertical position, offering like this the maximum surface contact with the wind taking advantage of the eolic force. The other peace makes an angle of 10° degrees with the horizontal shafts (26) so that when the wind beats in the back of the aerodynamic plate (2) this is in the almost horizontal position, and the angle of 10° allows that when the plate comes back to be reached by the wind, in front, this quickly lower returning to the vertical position impelling the rotational group.

The stoppers (46), in the part in that make contact with the plates (2), are covered with absorbent material in a way to soften the impact among the plates (2) and the stoppers (46) preserving the integrity of the plates (2).

The aerodynamic plates (2) are plane and of despicable thickness, compared to your width and length, and made of metallic materials, plastics, synthetic fibers, or woven resistant to the water and the bad weather to offer great resistance to the wind when it reaches them in their front. By virtue of your low weight the plates (2) are easily lifted up when the wind reaches them behind. The thickness of the plates is despicable.

The aerodynamic plates (2) can have a rigid frame made of a light material, just as aluminum, carbon fiber, plastic or similar materials with characteristics of high resistance and low weight.

The post (2) is fixed in the fixation post base (41) through it welds in the reinforcement ring (47). The fixation post base (41) is formed by four tubular supports and a reinforcement ring (47) that ties the supports to each other making an angle of 90° among them.

The tubular supports have a knee with an angle that can vary between 20° and 45° depending on the base size to be built.

The rotational vertical shaft (27) extends from the top of the post (23) even after the base of the post leaning on in the inferior plate (48), and in each extremity of the rotational vertical shaft (27) is a bearing (29). These bearings are responsible for the free rotation of the rotational vertical shaft (27). A pulley (30) is fixed in the inferior extremity of the rotational vertical shaft (27) that transmits the rotation to the smaller transmission pulley (31). In the same shaft of the pulley (31) is the larger transmission pulley (32) that transmits the rotation to the generator pulley (33). Where exists pulleys, these can be substituted by gears, that have the function of increase of the rotation.

The generator (34) adopted in this configuration it can be of the continuous average type or alternator.

The energy generated by the continuous current generator (34) is administered by a control circuit (35) that is connected with the continuous current generator (34), with the brightness sensor (36), with the reactor (37), and with the batteries (38) sending and receiving energy, and connected with the lamps (40) just sending energy. These batteries are dimensioned in agreement with the characteristics of the regime of the winds of the place where the converter will be installed, could be dimensioned to supply the absence of winds for one hour or more.

A conduit wire (39) is willing in the internal wall of the post (23) linking the reactor (37) to the lamps (40).

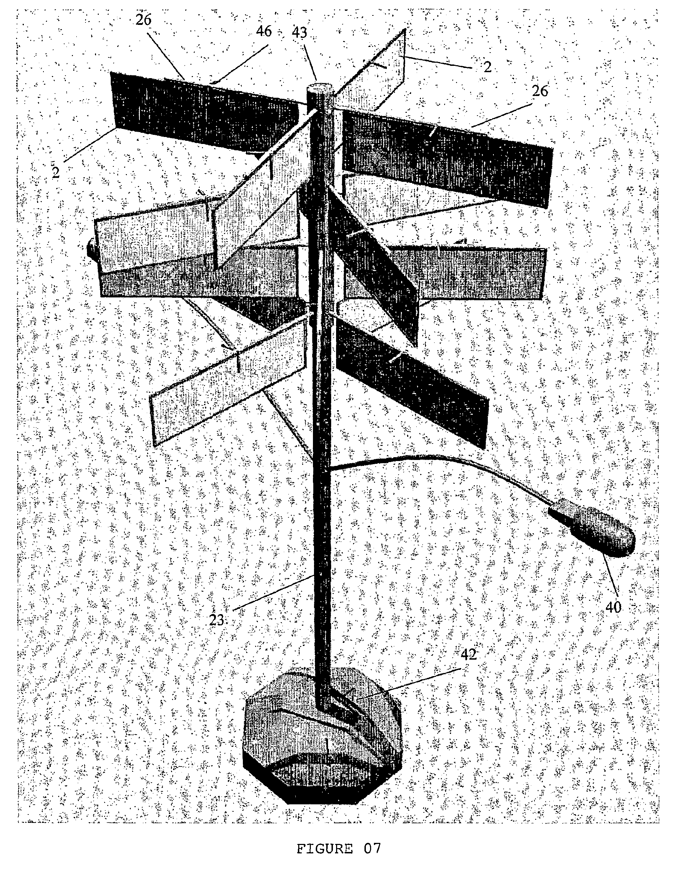

Once installed, the eolic CONVERTER begins to work in the presence of wind, that when beats in the plates (2) on the side A (see figure 07) it does with that the rotational group (43) rotates in the sense counterclockwise or hourly, depending on the side where the stoppers be installed. The plates on the side B almost lean horizontally (not demonstrated in the figures) providing a wind resistance of approximately 1 to 5% of the value of the wind force. In this way, when the plates that were on the side B arrive to the side A, by virtue of the angle of 10° that these were, the wind pushes them down leaving them in the vertical position impelling the rotational group (43) and so forth.

The rotational group (43) rotates leaning in the bearings and transmits the rotation to the rotational vertical shaft (27), that through the pulleys (30), (31), (32), and (33) it transmits the rotation to the continuous current generator (34) of continuous current that generates the electric power then. This energy is then last to the control circuit (35) that verifies the status of the brightness sensor (36). If the sensor informs that the brightness expresses it is low, in other words, it is at night or very cloudy, then the control circuit addresses the electric power to the reactor (37) that elevates the tension to be transmitted for the lamps (40). Otherwise, the control circuit (35) it addresses the electric power for the batteries (38) in a way to maintain them loaded. The control circuit (35) monitors the level of load of the batteries (38), and when it verifies that these are loaded, it cuts the supply of energy avoiding overloads and the premature waste of the batteries (38). In case the sensor indicates that the brightness is low, but the generator is not generating energy for wind lack, then the control circuit addresses the energy of the batteries (38) to the reactor (37) that turns on the lamps (40). The generated energy can be used to feed other systems, just as a residence.

## Claims

1. EOLIAN CONVERTER having a wind pickup system that allows a use of the wind force for the transformation in rotational mechanical energy; comprising several levels of the converter aerodynamic plates (2), without limit for the size of the referred plates, suitable for rotating a shaft even with low wind speeds, independently of the wind direction and always in the sense in that it was programmed to rotate, and in order to control the rotation per minute of the cylindrical vertical hollow cover (1) aerodynamic plates (2) can be added or removed ; wherein the aerodynamic plates (2) are capable of a controlled angular and translational movement; the converter further comprising structured horizontal arms (3); structural fastening cables (4); horizontal rotation shafts (5); translation servo-motors: for the aerodynamic plates (6); rotation servo-motors for the aerodynamic plates (7); aerodynamic plates rotation motor shafts (8); an aerodynamic plates shock absorber (9); an inertial load steering wheel (10); a steering wheel rack (11); a bevel gear (12); a RPM multiplier box (13); an elastic coupling (14); an alternating current generator (15); a coupling hydraulic clutch with an elastic glove (16); a combustion motor (17); a starter electromagnetic motor with an electromagnetic brake and an accelerator (18); a rotation sensor (19); a control and administration system central (20); support bearings (22); a cylindrical vertical post (23), wherein the aerodynamic plates (2) are fixed to the horizontal shafts (5) in such a way as to allow the plates to rotate by a quarter of a circle and also to be translated in both senses of the extension of the horizontal shafts (5) for maintaining the angular speed of the cover (1) constant, and wherein he horizontal arms (3) are fixed to the cover (1) forming crossbars (24) and in each horizontal plane these crossbars (24) are arranged so that the angle among them is given by the division of the angle of 90° by the number of used crossbars.

2. EOLIAN CONVERTER, in accordance with the claim 1, **characterized by** the cover (1) being mounted on the cylindrical vertical post (23) fixed in the ground or in a high structural platform.

3. EOLIAN CONVERTER, in accordance with the claim 1, **characterized by** the aerodynamic plates (2) being connected to the horizontal rotation shafts (5) through thread supports (25) that allow a translation of the plates (2) in both directions of the shafts (5) through the drive of the translation servo-motors (6) and a rotation of the plates (2), whereas the plates (2) are designed to stay in a vertical position, when receiving wind with their front parts and to rotate by 90° into an almost horizontal position, when receiving wind with their back parts.

4. EOLIAN CONVERTER in accordance with the claim 3 **characterized by** the aerodynamic plates (2) being plane and laminated.

5. EOLIAN CONVERTER, in accordance with the claim 4, **characterized by** the aerodynamic plates (2) being made of one of the following materials; metal plastic, synthetic fibers, or woven material resistant to water and weather effects.

6. EOLIAN CONVERTER, in accordance with the claim 5, **characterized by** the aerodynamic plates (2) possessing a rigid frame made with a light material, such as metals, metal alloys aluminum, fiber of carbon, iron, steel, or plastics.

7. EOLIAN CONVERTER, in accordance with the claim 1, **characterized by** being endowed with safety aerodynamic plates rotation servo-motors (7) able to rotate the plates (2) to the horizontal position in moments of windstorm or storm .

8. EOLIAN CONVERTER, in accordance with the claim 1, **characterized by** the horizontal shafts (5) having endless screw form and being connected to the translation servo-motors (6) designed to rotate the horizontal shafts (5) clockwise and counterclockwise for moving away or approaching the aerodynamic plates (2) from the cover (1) for maintaining constant the angular speed.

9. EOLIAN CONVERTER, in accordance with the claim 1, **characterized by** the horizontal arms (3) being tubular with trellis structure, self-sustained and connected to the cover (1).

10. EOLIAN CONVERTER, in accordance with the claim 1, **characterized by** the horizontal arms (3) being tubular, connected to the cover (1) and sustained by steel cables fixed to the extremities of the arms (3) and the cover (1).

11. EOLIAN CONVERTER, in accordance with the claim 9 or 10, **characterized by** the horizontal arms (3) being interlinked to each other through steel cables (4).

12. EOLIAN CONVERTER, in accordance with the claim 11, **characterized by** the horizontal arms (3) being endowed with shock absorbers (9) that soften the angular movement at the end of the course of the aerodynamic plates (2) for traction or flagged position.

13. EOLIAN CONVERTER, in accordance with the claim 1, **characterized by** the cylindrical cover (1) being endowed with a fly wheel (10) in its inferior extremity.

14. EOLIAN CONVERTER, in accordance with the claim 13, **characterized by** the fly wheel (10) having a rack (11) to transmit rotation to the bevel gear of the RPM multiplier box (13) and to the bevel gear of the electromagnetic motor (18) to control the rotation and departure of the converter.

15. EOLIAN CONVERTER, in accordance with the claim 1, **characterized by** the alternating current generator (15) for generating a constant output and with absence of cycle fluctuation by the control of the distance of the aerodynamic plates (2) to the cover (1) and/or by the control of the inclination of the plates (2) and also by the rotation control of the electromagnetic motor (18).

16. EOLIAN CONVERTER, in accordance with the claim 15, **characterized by** being provided with a combustion motor (17) to maintain the rotation of the generator (15) constant in cases of a wind stop.

17. EOLIAN CONVERTER, in accordance with the claim 1, **characterized by** an electromagnetic motor (18) for the reducing the converter inertia and for assisting in the control of constant rotation of the cover (1) as being able to be used as brake or magnetic accelerator.

18. EOLIAN CONVERTER, in accordance with the claim 1, **characterized by** a rotation sensor (19) for monitoring the rotation of the fly wheel (10) in order to achieve a constant speed.

19. EOLIAN CONVERTER, in accordance with the claim 1, **characterized by** a system control and administration central (20) for administering the energy generated by the generator (15), maintaining its output constant through the start of the motors (6), (7), (17) and/or (18) by the information feedback of the momentary rotation from the sensor (19) and from the momentary output voltage and current values.

20. EOLIAN CONVERTER, in accordance with the claim 1, **characterized by** its rotational group (43) being endowed with several levels of crossbars (24) depending on the desirable quantity of energy to be generated.

21. EOLIAN CONVERTER, in accordance with the claim 1, **characterized by** the rotational group (43) being mounted on the post (23) and supported by rotational group bearings (28).

22. EOLIAN CONVERTER, in accordance with the claim 1, **characterized by** the horizontal shafts (26) being endowed with stoppers (46) formed from two parts that form an angle of 80° to each other.

23. EOLIAN CONVERTER, in accordance with the claim 22, **characterized by** the stoppers (46), in the part in that make contact with the plates (2), being covered with a absorbent impact material.

24. EOLIAN CONVERTER, in accordance with the claim 1, **characterized by** the aerodynamic plates (2) being plane and with despicable thickness.

25. EOLIAN CONVERTER, in accordance with the claim 24, **characterized by** the aerodynamic plates (2) being made with metallic material, plastic, synthetic fibers, or woven resistant to the water and weather effects.

26. EOLIAN CONVERTER, in accordance with the claim 24, **characterized by** the aerodynamic plates (2) having a rigid frame made in a light material, just as aluminum, fiber of carbon, or plastic.

27. EOLIAN CONVERTER, in accordance with the claim 1, **characterized by** a conduit wire (39) being in the internal wall of the post (23) connecting the reactor (37) to the lamps (40).

## Patentansprüche

1. WINDKONVERTER, der ein Winderfassungssystem aufweist, das die Verwendung der Windkraft zur Umwandlung in mechanische Rotationsenergie ermöglicht; wobei der Konverter mehrere Ebenen aerodynamischer Platten (2) umfasst, die dazu geeignet sind, einen Schaft selbst bei niedrigen Windgeschwindigkeiten unabhängig von der Windrichtung und immer in die Richtung zu drehen, in die die Rotation programmiert wurde, ohne dass die genannten Platten in ihrer Größe begrenzt sind; und wobei aerodynamische Platten (2) hinzugefügt oder entfernt werden, um die Umdrehungen pro Minute des zylinderförmigen vertikalen Mantelrohrs (1) steuern zu können; wobei die aerodynamischen Platten (2) zu einer Winkel- oder Verschiebebewegung in der Lage sind und der Konverter ferner strukturierte horizontale Arme (3), strukturelle Befestigungskabel (4), horizontale drehbare Wellen (5), verschiebende Stellmotoren für die aerodynamischen Platten (6), drehende Stellmotoren für die aerodynamischen Platten (7), drehende Motorwellen für die aerodynamischen Platten (8), einen Stoßdämpfer für die aerodynamischen Platten (9), ein Schwungrad (10), eine Schwungrad-Zahnstange (11), ein Kegelzahnrad (12), eine Drehzahlmultiplikatoreinheit (13), ein elastisches Verbindungsstück (14), einen Wechselstromgenerator (15), eine koppelnde hydraulische Kupplung mit einer elastischen Hülle (16), einen Verbrennungsmotor (17), einen elektromagnetischen Anlassermotor mit einer elektromagnetischen Bremse und einem Beschleuniger (18), einen Drehzahlsensor (19), eine Steuer- und Ausgabesystemzentrale (20), Traglagern (22), eine zylinderförmige vertikale Stange (23) umfasst, wobei die aerodynamische Platten (2) so an den horizontalen Wellen (5) befestigt sind, dass die Platten sich um das Viertel eines Kreises drehen und auch in beide Richtungen der Länge der horizontalen Wellen (5) verschoben werden können, um die Winkelgeschwindigkeit des Rohrs (1) konstant zu halten; und wobei die horizontalen Arme (3) an dem Rohr (1) befestigt sind, um Querträger (24) zu bilden und wobei diese Querträger (24) auf jeder horizontalen Ebene so angeordnet sind, dass der Winkel zwischen ihnen durch die Division des Winkels von 90 ° durch die Anzahl der verwendeten Querstangen bestimmt wird.

2. WINDKONVERTER nach Anspruch 1, **dadurch gekennzeichnet, dass** das Rohr (1) auf der zylinderförmigen vertikalen Stange (23) montiert ist, die im Boden oder einen hohen baulichen Plattform verankert ist.

3. WINDKONVERTER nach Anspruch 1, **dadurch gekennzeichnet, dass** die aerodynamische Platten (2) mit den horizontalen drehbaren Wellen (5) über Gewindeaufnahmen (25) verbunden sind, die ein Verschieben der Platten (2) in beide Richtungen der Wellen (5) durch den Antrieb der verschiebenden Stellmotoren (6) und ein Drehen der Platten (2) zulassen, wobei die Platten (2) so konzipiert sind, dass sie in einer vertikalen Position bleiben, wenn sie Wind mit ihrer Vorderseite empfangen, und sich um 90 ° in eine fast horizontale Position drehen, wenn sie Wind mit ihrer Rückseite empfangen.

4. WINDKONVERTER nach Anspruch 3, **dadurch gekennzeichnet, dass** die aerodynamischen Platten (2) flach und laminiert sind.

5. WINDKONVERTER nach Anspruch 4, **dadurch gekennzeichnet, dass** die aerodynamischen Platten (2) aus einem der folgenden Materialien gefertigt sind: Metall, Kunststoff, Kunstfaser oder wasser- und wetterfestes Gewebe.

6. WINDKONVERTER nach Anspruch 5, **dadurch gekennzeichnet, dass** die aerodynamischen Platten (2) einen steifen Rahmen aufweisen, der aus einem leichten Material wie Metallen, Metalllegierungen, Aluminium, Kohlefaser, Eisen, Stahl oder Kunststoff gefertigt ist.

7. WINDKONVERTER nach Anspruch 1, **dadurch gekennzeichnet, dass** er mit drehenden Sicherheitsstellmotoren (7) für die aerodynamischen Platten ausgestattet ist, die in der Lage sind, die Platten (2) zu Zeiten heftigen Winds oder bei Stürmen in die horizontale Position zu drehen.

8. WINDKONVERTER nach Anspruch 1, **dadurch gekennzeichnet, dass** die horizontalen Wellen (5) die Form von Endlosschrauben haben und mit den verschiebenden Stellmotoren (6) verbunden sind, die so konzipiert sind, dass sie die horizontalen Wellen (5) im Uhrzeigersinn und gegen den Uhrzeigersinn drehen, um die aerodynamischen Platten (2) von dem Rohr (1) weg oder zu ihm hin zu bewegen, um die Winkelgeschwindigkeit konstant zu halten.

9. WINDKONVERTER nach Anspruch 1, **dadurch gekennzeichnet, dass** die horizontalen Arme (3), die röhrenförmig sind und eine Gitterstruktur aufweisen, selbsttragend und mit dem Rohr (1) verbunden sind.

10. WINDKONVERTER nach Anspruch 1, **dadurch gekennzeichnet, dass** die horizontalen Arme (3) röhrenförmig und mit der Abdeckung verbunden sind, und von Stahlkabeln getragen werden, die an den äußersten Enden der Arme (3) und dem Rohr (1) befestigt sind.

11. WINDKONVERTER nach Anspruch 9 oder 10, **dadurch gekennzeichnet, dass** die horizontalen Arme (3) durch Stahlkabel (4) miteinander verbunden sind.

12. WINDKONVERTER nach Anspruch 11, **dadurch gekennzeichnet, dass** die horizontalen Arme (3) mit Stoßdämpfern (9) ausgestattet sind, die die Winkelbewegung am Ende der Strecke der aerodynamischen Platten (2) zwischen Kraftschluss oder der erschlafften Position abschwächt.

13. WINDKONVERTER nach Anspruch 1, **dadurch gekennzeichnet, dass** das zylinderförmige Rohr (1) an seinem unteren äußersten Ende mit einem Schwungrad (10) ausgestattet ist.

14. WINDKONVERTER nach Anspruch 13, **dadurch gekennzeichnet, dass** das Schwungrad (10) eine Zahnstange (11) aufweist, um Drehung auf das Kegelzahnrad der Drehzahlmultiplikatoreinheit (13) und auf das Kegelzahnrad des elektromagnetischen Motors (18) zu übertragen, der die Drehung und das Trennen des Konverters steuert.

15. WINDKONVERTER nach Anspruch 1, **gekennzeichnet durch** den Wechselstromgenerator (15) zum Erzeugen einer konstanten Ausgabe und bei Abwesenheit von Zyklusschwankungen durch das Steuern der Entfernung der aerodynamischen Platten (2) von dem Rohr (1) und/oder **durch** das Steuern der Neigung der Platten (2) und auch **durch** das Steuern der Drehzahl des elektromagnetischen Motors (18).

16. WINDKONVERTER nach Anspruch 15, **dadurch gekennzeichnet, dass** ein Verbrennungsmotor (17) bereitgestellt wird, um die Drehzahl des Generators (15) konstant zu halten, falls Windstille eintritt.

17. WINDKONVERTER nach Anspruch 1, **dadurch gekennzeichnet, dass** ein elektromagnetischer Motor (18) zum Reduzieren der Konverterträgheit und zum Unterstützen der Steuerung einer konstanten Drehzahl des Rohrs (1) als Bremse oder magnetischer Beschleuniger verwendet werden kann.

18. WINDKONVERTER nach Anspruch 1, **gekennzeichnet durch** einen Drehzahlsensor (19) zur Überwachung der Drehzahl des Schwungrades (10), um eine konstante Geschwindigkeit zu erzielen.

19. WINDKONVERTER nach Anspruch 1, **gekennzeichnet durch** eine Systemsteuerungs- und Ausgabezentrale (20) zum Ausgeben der Energie, die vom Generator (15) erzeugt wird, wobei dessen Ausgabe **durch** das Starten der Motoren (6), (7), (17) und/oder (18) **durch** das Informationsfeedback zur momentanen Drehzahl von dem Sensor (19) und von den Werten der momentanen Ausgabespannung und des momentanen Ausgabestroms konstant gehalten wird.

20. WINDKONVERTER nach Anspruch 1, **dadurch gekennzeichnet, dass** seine Rotationsgruppe (43), abhängig von der angestrebten erzeugten Energiemenge, mit mehreren Ebenen von Querträgern (24) ausgerüstet ist.

21. WINDKONVERTER nach Anspruch 1, **dadurch gekennzeichnet, dass** die Rotationsgruppe (43) auf der Stange (23) montiert ist und von Rotationsgruppenlagern (28) getragen wird.

22. WINDKONVERTER nach Anspruch 1, **dadurch gekennzeichnet, dass** die horizontalen Wellen (26) mit Anschlägen (46) ausgestattet sind, die aus zwei Teilen gebildet werden, die in einem Winkel von 80 ° zueinander stehen.

23. WINDKONVERTER nach Anspruch 22, **dadurch gekennzeichnet, dass** die Anschläge (46) an dem Teil, der mit den Platten (2) in Kontakt kommt, mit einem stoßdämpfenden Material bedeckt sind.

24. WINDKONVERTER nach Anspruch 1, **dadurch gekennzeichnet, dass** die aerodynamischen Platten (2) flach sind und eine minimale Dicke haben.

25. WINDKONVERTER nach Anspruch 24, **dadurch gekennzeichnet, dass** die aerodynamischen Platten (2) aus metallischem Material, Kunststoff, Kunstfaser oder wasser- und wetterfestem Gewebe gefertigt sind.

26. WINDKONVERTER nach Anspruch 24, **dadurch gekennzeichnet, dass** die aerodynamischen Platten (2) einen steifen Rahmen aufweisen, der aus einem leichten Material wie Aluminium, Kohlefaser, oder Kunststoff gefertigt ist.

27. WINDKONVERTER nach Anspruch 1, **dadurch gekennzeichnet, dass** sich in der inneren Wand der Stange (23) ein Rohrdraht (39) befindet, der den Reaktor (37) mit den Lampen (40) verbindet.

## Revendications

1. Convertisseur éolien ayant un système d'exploitation du vent qui permet d'utiliser la force du vent pour la transformer en énergie mécanique rotative. Le convertisseur comprenant plusieurs niveaux de plaques aérodynamiques (2), sans limite pour la dimension adéquate des plaques référencées pour la rotation d'un arbre même avec des vents à faible vitesse, indépendamment de la direction du vent et toujours dans la direction dans laquelle il a été programmé pour pivoter, et afin de maîtriser la rotation par minute du couvercle cylindrique creux vertical (1). Les plaques aérodynamiques peuvent être ajoutées ou retirées ; les plaques aérodynamiques (2) sont capables d'un mouvement angulaire et de translation maîtrisé ; le convertisseur comprenant aussi des bras structurés horizontaux (3) ; des câbles de fixation structurels (4) ; des arbres de rotation horizontale (5) ; des servomoteurs de translation pour les plaques aérodynamiques (6) ; des servomoteurs de rotation pour les plaques aérodynamiques (7) ; des plaques aérodynamiques de rotation des arbres du moteur (8) ; un amortisseur de chocs pour plaques aérodynamiques (9) ; un volant de direction de la charge d'inertie (10) ; une crémaillère de volant de direction (11) ; un engrenage conique (12) ; une boîte multiplicatrice de tpm (13) ; un couplage élastique (14) ; un générateur à courant alternatif (15) ; un accouplement d'embrayage hydraulique avec un gant élastique (16) ; un moteur à combustion (17) ; un moteur électromagnétique de démarrage avec un frein électromagnétique et un accélérateur (18) ; un détecteur de rotation (19) ; un système de centre de commande et d'administration (20) ; des roulements de support (22) ; un pylône cylindrique vertical (23) ; les plaques aérodynamiques (2) étant fixées aux arbres de rotation horizontale (5) de telle façon à permettre aux plaques de tourner par un quart de tour et aussi d'être translatées dans les deux directions de l'extension des arbres horizontaux (5) pour maintenir constante la vitesse angulaire du couvercle (1), et les bras horizontaux (3) étant fixés au couvercle (1) formant des barres transversales (24) et dans chaque plan horizontal ces barres transversales (24) sont disposées pour que l'angle entre eux est obtenu par la division de l'angle de 90° par le nombre de barres transversales utilisées.

2. Convertisseur éolien selon la revendication 1, **caractérisé en ce que** le couvercle (1) est monté sur le pylône cylindrique vertical (23) fixé au sol ou sur une plateforme structurelle en hauteur.

3. Convertisseur éolien selon la revendication 1, **caractérisé en ce que** les plaques aérodynamiques (2) sont reliées aux arbres de rotation horizontale (5) à travers des supports de filetage (25) qui permettent une translation des plaques (2) dans les deux directions des arbres (5) par la traction des servomoteurs de translation (6) et une rotation des plaques (2) tandis que les plaques (2) sont conçues pour rester dans une position verticale, quand elles reçoivent le vent avec leurs parties avant et pour tourner à 90° dans une position presque horizontale, quand ils reçoivent le vent par leurs parties arrières.

4. Convertisseur éolien selon la revendication 3, **caractérisé en ce que** les plaques aérodynamiques (2) sont planes et laminées.

5. Convertisseur éolien selon la revendication 4, **caractérisé en ce que** les plaques aérodynamiques (2) sont fabriquées avec l'un des matériaux suivants : métal, plastic, fibres synthétiques ou matériau tissé résistants aux effets de l'eau et du climat.

6. Convertisseur éolien selon la revendication 5, **caractérisé en ce que** les plaques aérodynamiques (2) ont une armature rigide fabriquée avec un matériau léger, tel que les métaux, les alliages de métal à base d'aluminium, la fibre de carbone, le fer, l'acier ou le plastic.

7. Convertisseur éolien selon la revendication 1, **caractérisé en ce qu'**il est doté de servomoteurs de rotation des plaques aérodynamiques (7) sûrs capables de faire tourner les plaques (2) à la position horizontale dans des conditions de bourrasque ou de tempête.

8. Convertisseur éolien selon la revendication 1, **caractérisé en ce que** les arbres de rotation horizontale (5) ont des vis sans fin et sont connectés aux servomoteurs de translation (6) conçues pour faire tourner les arbres horizontaux (5) dans le sens horaire et antihoraire, pour s'éloigner ou s'approcher des plaques aérodynamiques (2) à partir du couvercle (1) afin de maintenir la vitesse angulaire constante.

9. Convertisseur éolien selon la revendication 1, **caractérisé en ce que** les bras horizontaux (3) sont tubulaires avec une structure en forme de treillis, autonomes et reliés au couvercle (1).

10. Convertisseur éolien selon la revendication 1, **caractérisé en ce que** les bras horizontaux (3) sont tubulaires, reliés au couvercle (1) et soutenus par des câbles en acier qui sont fixés aux extrémités des bras (3) et du couvercle (1).

11. Convertisseur éolien selon la revendication 9 ou 10, **caractérisé en ce que** les bras horizontaux (3) sont interconnectés entre eux par des câbles en acier (4).

12. Convertisseur éolien selon la revendication 11, **caractérisé en ce que** les bras horizontaux (3) sont dotés d'amortisseurs de chocs (9) qui assouplissent le mouvement angulaire en fin de parcours des plaques aérodynamiques (2) pour la position de traction ou marquée.

13. Convertisseur éolien selon la revendication 1, **caractérisé en ce que** le couvercle cylindrique (1) est doté d'un volant d'inertie (10) à son extrémité inférieur.

14. Convertisseur éolien selon la revendication 13, **caractérisé en ce que** le volant d'inertie (10) comporte un engrenage (11), pour transmettre la rotation à l'engrenage conique de la boîte multiplicatrice de tpm (13) et à l'engrenage conique du moteur électromagnétique (18) pour contrôler la rotation et le départ du convertisseur.

15. Convertisseur éolien selon la revendication 1, **caractérisé en ce qu'**un générateur à courant alternatif (15) génère un débit constant sans fluctuation de cycle par le contrôle de la distance entre les plaques aérodynamiques (2) et le couvercle (1) et/ou par le contrôle de l'inclinaison des plaques (2) et aussi par le contrôle de la rotation du moteur électromagnétique (18).

16. Convertisseur éolien selon la revendication 15, **caractérisé en ce qu'**un moteur à combustion (17) permet de maintenir la rotation du générateur (15) constante en cas de panne de vent.

17. Convertisseur éolien selon la revendication 1, **caractérisé en ce qu'**un moteur électromagnétique (18) permet de réduire l'inertie du convertisseur et aide au contrôle de la rotation constante du couvercle (1) pour être capable d'être utilisé comme frein ou accélérateur magnétique.

18. Convertisseur éolien selon la revendication 1, **caractérisé en ce qu'**un détecteur de rotation (19) surveille la rotation du volant d'inertie (10) afin d'atteindre une vitesse constante.

19. Convertisseur éolien selon la revendication 1, **caractérisé en ce qu'**un système central de commande et d'administration (20) permet d'administrer l'énergie générée par le générateur (15), de maintenir son débit constant à travers le démarrage des moteurs (6), (7), (17) et /ou (18) à travers le retour d'information de la rotation momentanée du détecteur (19) et de la tension de sortie momentanée et des valeurs du courant.

20. Convertisseur éolien selon la revendication 1, **caractérisé en ce que** ses groupes de rotation (43) sont dotés de plusieurs niveaux de barres transversales (24) selon sur la quantité d'énergie que l'on souhaite générer.

21. Convertisseur éolien selon la la revendication 1, **caractérisé en ce que** le groupe de rotation (43) est monté sur le pylône (23) et supporté par un groupe de roulements à rotation (28).

22. Convertisseur éolien selon la revendication 1, **caractérisé en ce que** les arbres de rotation horizontale (26) sont dotés de butées (46) formées de deux parties qui définissent un angle de 80° entre eux.

23. Convertisseur éolien selon la revendication 22, **caractérisé en ce que** les butées (46), dans la partie qui entrent en contact avec les plaques (2), sont recouvertes d'un matériau absorbant les chocs.

24. Convertisseur éolien selon la revendication 1, **caractérisé en ce que** les plaques aérodynamiques (2) sont planes et d'épaisseur insignifiante.

25. Convertisseur éolien selon la revendication 24, **caractérisé en ce que** les plaques aérodynamiques (2) sont faites de matériau métallique, plastic, fibres synthétiques ou tissé résistant aux effets de l'eau et du climat.

26. Convertisseur éolien selon la revendication 24, **caractérisé en ce que** les plaques aérodynamiques (2) possèdent une armature rigide fabriquée dans un matériau léger, comme l'aluminium, la fibre de carbone ou le plastic.

27. Convertisseur éolien selon la revendication 1, **caractérisé en ce qu'**un câble de conduit (39) se trouve dans la paroi interne du pylône (23) et relie le réacteur (37) aux lampes (40).
